Europäisches Patentamt

European Patent Office

Office européen des brevets

(11) Veröffentlichungsnummer: **0 280 926**
**A1**

(12) # EUROPÄISCHE PATENTANMELDUNG

(21) Anmeldenummer: 88101800.6

(22) Anmeldetag: 08.02.88

(51) Int. Cl.⁴: **C02F 1/46 , C25B 11/04**

Die Bezeichnung der Erfindung wurde geändert (Richtlinien für die Prüfung im EPA, A-III, 7.3).

(30) Priorität: 20.02.87 CH 660/87

(43) Veröffentlichungstag der Anmeldung:
07.09.88 Patentblatt 88/36

(84) Benannte Vertragsstaaten:
CH DE FR GB IT LI SE

(71) Anmelder: BBC Brown Boverl AG
Haselstrasse
CH-5401 Baden(CH)

(72) Erfinder: Kötz, Rüdiger, Dr.
Brüelstrasse 386B
CH-5424 Unterehrendingen(CH)
Erfinder: Schüler, Claus, Dr.
Gemeindestrasse 4
CH-8967 Widen(CH)
Erfinder: Stuckl, Samuel, Dr.
Sternenstrasse 7
CH-5415 Nussbaumen(CH)

(54) **Verfahren zur Reinigung industrieller Abwässer mittels elektrochemischer Oxydation.**

(57) Verfahren zur Reinigung industrieller Abwässer durch unmittelbare Oxydation der organischen Schadstoffe in einer elektrochemischen Zelle, deren Anode in ihrem aktiven Teil oder in einer allfällig vorhandenen Zwischenschicht weder Edelmetalle in irgendeiner Form noch $PbO_2$ noch Graphit enthält sondern in diesem Teil ausschliesslich aus $SnO_2$ besteht, welches mit F, Cl, Sb, Mo, W, Nb, Ta oder einer Mischung von mindestens zweien dieser Elemente dotiert ist. Die Anode weist eine Sauerstoffüberspannung auf, die höher als die einer $PbO_2$-Vergleichsanode ist und unter einer Stromdichte von 0,1 mA/cm² in 1normaler $H_2SO_4$ unter einem Druck von 1 bar bei einer Temperatur von 20 °C in Gegenwart einer Pt-Gegenelektrode den Wert von mindestens 1,85 V erreicht.

EP 0 280 926 A1

# Verfahren zur Reinigung industrieller Abwässer durch unmittelbare Oxydation der organischen Schadstoffe

## Technisches Gebiet

Reinigung industrieller Abwässer und Abbau der organischen Schadstoffe in einer elektrochemischen Zelle mit hoher Langzeitstabilität.

Die Erfindung bezieht sich auf ein elektrochemisches Verfahren zum möglichst raschen und rationellen Abbau von in Abwässern enthaltenen Organika unter Verwendung von Elektroden mit hoher Sauerstoffüberspannung.

Insbesondere betrifft sie ein Verfahren zur Reinigung industrieller Abwässer durch unmittelbare Oxydation der organischen Schadstoffe mittels elektrochemischer Oxydation in einer Zelle.

## Stand der Technik

Es ist bekannt, Wasser durch Einwirkung von Oxydationsmitteln aufzubereiten. Dahin gehört auch die Abwasseraufbereitung unter Anwendung der direkten anodischen Oxydation in einer elektrochemischen Zelle, wobei das Abwasser bzw. die wässrige Lösung eines abzubauenden organischen Schadstoffes die Funktion des Elektrolyten übernimmt. Ein Beispiel ist die Behandlung von Cyanid-Lösungen (Vgl. A.T. Kuhn, "The electrochemical treatment of aqueous effluent streams" in "Electrochemistry of cleaner environments", p.p. 98-130, J.O'M.Bockris, Plenum Press, New York-London, 1972). An das Elektrodenmaterial werden keine hohen Anforderungen gestellt, da die Cyanid-Oxydation schon bei verhältnismässig niedrigen Redox-Potentialen durchgeführt werden kann. Anders ist dies bei schwer abbaubaren Organika, deren Oxydation höhere Potentiale erfordert. Hier ist eine möglichst hohe Sauerstoff-Ueberspannung an der Anode eine unabwendbare Bedingung. Die beim Abbau schwer oxydierbarer organischer Stoffe zu bildenden Zwischenprodukte der Wasseroxydation können nur mit hohen Sauerstoff-Ueberspannungen an der Anode gebildet werden. Dies bedingt einen spezifischen Anodenwerkstoff (Vgl. DE-A-34 28 582). Hier wird vor allem PbO$_2$ als aktive Schicht der Anode vorgeschlagen.

PbO$_2$-Anoden verfügen indessen für die vorgesehenen Zwecke nicht über die notwendige Langzeit-Korrosionsbeständigkeit und die Korrosionsprodukte sind in hohem Masse giftig, was im Abwasser nicht tolerierbar ist.

In zahlreichen technischen elektrochemischen Prozessen spielen langzeitstabile Anoden mit möglichst geringem Edelmetallgehalt eine wichtige Rolle. Meist bestehen diese Anoden aus einem Träger aus einem filmbildenden Metall ("Ventilmetall") wie Titan und einer aktiven Oberflächenschicht aus mindestens einem Edelmetall, mindestens einem Edelmetalloxyd oder einer Mischung aus einem Edelmetalloxyd mit einem Oxyd eines filmbildenden Metalls wie TiO$_2$.

Nach der Sauerstoffüberspannung geordnet können die für die vorliegenden Zwecke verwendeten Anoden in der Regel wie folgt beschrieben werden:
- Anoden mit geringer Sauerstoffüberspannung:
Diese Anoden haben einen vergleichsweise hohen Gehalt an Edelmetallen bzw. Edelmetalloxyden. Die Oxyde des Rutheniums und Iridiums bzw. deren Mischungen stellen nach wie vor die besten Elektrokatalysatoren in sauren oder neutralen Medien dar. Das gilt auch für diese Mischungen mit stabilisierenden Zusätzen von Titan-oder Zinnoxyd (vgl. A. Nidola in S. Trasatti, Ed., Electrodes of Conductive Metal Oxides, Part B, Seite 627-659, Elsevier Scientific Publ. Co., 1981).
- Anoden mit mittlerer bis hoher Sauerstoffüberspannung:
Diese Anoden haben einen geringeren Edelmetallgehalt, da die Sauerstoffentwicklung als Konkurrenzreaktion zugunsten derjenigen eines anderen Gases (beispielsweise Chlor) unterdrückt werden soll. Ein vollständiger Verzicht auf Edelmetalle wie Pt, Pd, Ru, Ir ist nicht möglich, sonst würde die Ueberspannung zu hoch ausfallen (vgl. EP-A-0 153 586; DE-A-31 03 168; DE-C-26 25 820).
- Anoden mit sehr hoher Sauerstoffüberspannung:
Diese Anoden haben entweder eine ähnliche Zusammensetzung wie die vorgenannten oder sie bestehen überwiegend oder ausschliesslich aus PbO$_2$ oder Graphit.

Die Anoden der letztgenannten Art lassen im Betrieb zu wünschen übrig, da deren Langzeitstabilität ungenügend ist. PbO$_2$ muss zusätzlich gegen kathodische Polarisation geschützt werden (vgl. DE-A-34 32 684).

2

Für elektrochemische Prozesse, insbesondere die Zersetzung von Alkalimetallchloriden wurden schon mit Sb dotierte SnO$_2$-Anoden vorgeschlagen (Vgl. DE-A-19 62 860). Der aktive Teil wurde als dünne Schicht auf einen Träger aus filmbildendem Metall (Ti, Zr, Nb, Ta, W) in Form von Lösungen aufgebracht, die nachträglich getrocknet und wärmebehandelt und damit in Oxydgemische übergeführt wurden.

Es besteht daher ein grosses Bedürfnis nach Verbesserung der elektrochemischen Abwasserreinigungsverfahren und geeigneter Elektroden, welche eine hinreichende Langzeitstabilität aufweisen und möglichst hohe Sauerstoffüberspannungen erreichen, um an sich bekannte elektrochemische Prozesse noch effektiver durchführen zu können.

Darstellung der Erfindung

Der Erfindung liegt die Aufgabe zugrunde, ein Verfahren zur industriellen Abwasserreinigung durch unmittelbare Oxydation der organischen Schadstoffe in einer elektrochemischen Zelle anzugeben, wobei Elektroden vorzuschlagen sind, welche ohne Verwendung von kostspieligen Edelmetallen eine sehr hohe Sauerstoffüberspannung besitzen, welche möglichst noch über derjenigen von PbO$_2$ liegt. Es soll ferner eine hohe Langzeitstabilität sowohl im Betrieb wie während Betriebsunterbrüchen gewährleistet werden. Der Aufbau der verwendeten Elektroden soll einfach sein, keine zusätzlichen Massnahmen zum Schutz gegen kathodische Polarisation erfordern und eine einfache reproduzierbare Herstellungsweise ermöglichen. Das Verfahren soll die Anwendbarkeit derartiger elektrochemischer Prozesse erweitern und geeignet sind, neue Prozesse zu erschliessen.

Diese Aufgabe wird dadurch gelöst, dass im eingangs erwähnten Verfahren als Anode eine Elektrode mit hoher Sauerstoffüberspannung verwendet wird, welche weder in ihrem aktiven Teil noch in einer allfälligen Zwischenschicht Edelmetalle in irgend einer Form noch PbO$_2$ noch Graphit enthält, und dass der aktive Teil ausschliesslich aus mit F, Cl, Sb, Mo, W, Nb oder Ta oder einer Mischung von mindestens zweien der vorgenannten Elemente dotiertem SnO$_2$ besteht.

Weg zur Ausführung der Erfindung

Die Erfindung wird anhand der nachfolgenden, durch eine Figur erläuterten Verfahrensbeispiele beschrieben.

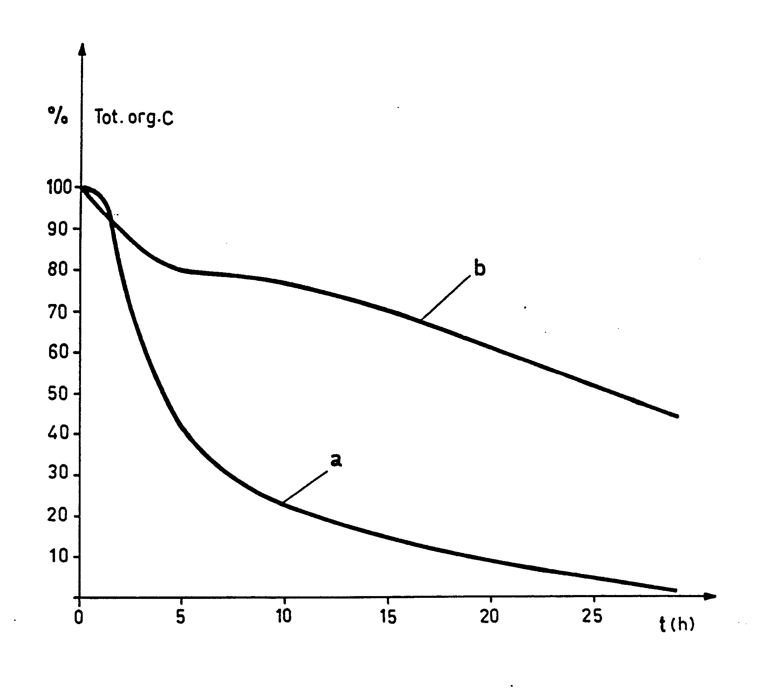

Dabei zeigt die Figur ein Diagramm der Abnahme des totalen organischen Kohlenstoffs in Funktion der Zeit für einen gemäss Verfahren durchgeführten elektrochemischen Prozess unter Verwendung einer dotierten SnO$_2$-Anode im Vergleich mit einem herkömmlichen Verfahren bei Verwendung einer PbO$_2$-Anode.

Der Elektrolyt bestand aus einer 0,5 normalen wässrigen Na$_2$SO$_4$-Lösung, der 10 ppm Benzoesäure C$_6$H$_5$COOH beigemischt war. Druck p = 1 bar, Temperatur T = 20 °C.

Der Kern des Verfahrens besteht in der Verwendung einer optimalen SnO$_2$-Anode, weshalb zunächst deren Herstellung beschrieben wird:

Beispiel A für die Herstellung einer SnO$_2$-Anode:

Als Trägerwerkstoff für eine Anode wurde Titan verwendet. Ein quadratisches Titanblech von 10 mm Seitenlänge und 1 mm Dicke wurde in Chlorothen und Azeton entfettet und anschliessend in kochender Oxalsäure geätzt. Dann wurde das Blech auf eine Heizplatte gelegt und auf eine Temperatur von 450 °C erhitzt. Das Blech wurde nun mittels einer Sprühpistole unter Verwendung von Stickstoff als Transportmittel (Trägergas) unter einem Druck von 0,5 bar mit einer 0,7 molaren Lösung von wasserfreiem SnCl$_4$ in Aethylazetat besprüht. Dabei zersetzte sich das SnCl$_4$ unter dem Einfluss des Luftsauerstoffes in situ auf der Titanblechoberfläche und es wurde ein zusammenhängender mit Cl$^-$ dotierter SnO$_2$-Film von 0,32 μm Dicke gebildet.

Das mit einer SnO$_2$-Oberflächenschicht bedeckte Titanblech wurde nun in eine elektrochemische Zelle eingesetzt, in welcher sich 350 ml 1 normale H$_2$SO$_4$ als Elektrolyt befanden. Die Sauerstoffüberspannung der Elektrode wurde mittels der Standard-Dreielektrodenanordnung potentiostatisch gemessen. Die Gegenelektrode bestand aus einem Platinblech, die Bezugselektrode war die normierte gesättigte Kalomelektrode. Die Versuche wurden bei einem Druck von 1 bar und einer Temperatur von 20 °C durchgeführt. Unter einer Stromdichte von 0,1 mA/cm$^2$ betrug die Sauerstoffüberspannung gegenüber der Bezugselektrode

(Einsatzspannung der $O_2$-Entwicklung) 1,87 V. Die Steigung nach der Formel von Tafel (logarithmische Abhängigkeit der Stromdichte von der Ueberspannung) betrug ca. 130 mV/Dekade. Zum Vergleich wurde die Sauerstoffüberspannung an einer Pt-Anode und einer $PbO_2$-Anode bestimmt. Sie betrug unter sonst gleichen Betriebsbedingungen 1,48 V bzw. 1,65 V (Einsatzspannung).

Beispiel B für die Herstellung einer $SnO_2$-Anode:

Als Trägerwerkstoff für eine Anode wurde wie in Beispiel A Titan verwendet. Ein rechteckförmiges Titanblech von 100 mm Breite, 200 mm Länge und 2,5 mm Dicke wurde gemäss Beispiel A entfettet und gebeizt. Dann wurde in einer flachen Schale eine Lösung von 277 g Zinnchlorid-Hydrat $SnCl_4 \bullet 5H_2O$, 29,7 g $SbCl_3$ und 87 g konzentrierter HCl in 2 l n-Butanol hergestellt. Das Titanblech wurde während 10 s in diese Lösung getaucht, abtropfen gelassen und unter einer Infrarot-Lampe getrocknet. Anschliessend wurde das Blech während 10 min bei einer Temperatur von 500 °C an Luft wärmebehandelt. Dabei wurden die Sn-und Sb-Salze hydrolysiert und in ein mit Antimon dotiertes $SnO_2$ umgewandelt. Der Tauch-, Trocknungs- und Wärmebehandlungsprozess wurde noch 4 mal wiederholt und das mit dem Ueberzug versehene Titanblech anschliessend während 1 h bei 500 °C wärmebehandelt.

Die derart mit Antimon dotierte $SnO_2$-Elektrode wurde nach dem in Beispiel A angegebenen Verfahren geprüft. Es ergab sich eine Sauerstoffüberspannung (Einsatzspannung der $O_2$-Entwicklung) von 1,95 V.

Beispiel C für die Herstellung einer $SnO_2$-Anode:

In einem Becherglas wurde zunächst eine Lösung von 260,5 g $SnCl_4$ (entsprechend einem Grammol) und 400 ml Wasser hergestellt und in diese unter starkem Rühren so lange eine 4%ige $NH_4OH$-Lösung eingetropft bis sich ein kolloidaler Niederschlag von $SnO_2 \bullet nH_2O$ gebildet hatte und die überstehende Lösung einen pH-Wert von 3,5 aufwies. Der Niederschlag wurde zentrifugiert, die überstehende Lösung dekantiert und der Niederschlag mit 500 ml Wasser als Waschflüssigkeit wieder dispergiert. Dieses Auswaschen wurde insgesamt 3 Mal wiederholt und der kolloidale Rückstand schliesslich in 500 ml Wasser ein letztes Mal dispergiert und anschliessend unter Rühren bei einer Temperatur von 40 °C während 3 h peptisiert. Auf diese Weise wurde ein milchig-weisses Sol von kolloidalem $SnO_2 \bullet nH_2O$ erhalten, das noch geringe Mengen an $Cl^-$-Ionen enthielt. Diesem Sol können die gewünschten Dotierstoffe als wasserlösliche organische Salze zugegeben werden. Im vorliegenden Fall wurden 50 ml einer Lösung von Antimontartrat in Wasser hergestellt, derart, dass der Gehalt an $Sb^{3+}$-Ionen 4,87 g (entsprechend ca. 0,04 Grammol) betrug. Diese Lösung wurde unter starkem Rühren in das vorgenannte milchig-weisse $SnO_2$-Sol eingetropft.

Das auf diese Weise hergestellte dotierte Sol wurde nun durch Sprühen auf ein gemäss Beispiel 1 gereinigtes Titanblech von 40 mm Breite, 60 mm Länge und 1,2 mm Dicke aufgetragen. Der Ueberzug wurde in Luft getrocknet und während 5 min bei einer Temperatur von ca. 500 °C wärmebehandelt. Dabei wurde das Wasser ausgetrieben und das zurückbleibende dotierte $SnO_2$ fest in die Oberfläche des Titanbleches eingebrannt. Dieser Sprüh-, Trocknungs-und Einbrennprozess wurde noch 4 Mal wiederholt. Der fertige Ueberzug wies eine Schichtdicke von durchschnittlich 2 μm auf.

Die auf diese Weise mit Antimon dotierte $SnO_2$-Elektrode wurde nach dem in Beispiel A angegebenen Messverfahren untersucht. Dabei wurde eine Sauerstoffüberspannung (Einsatzspannung) von 1,9 V gemessen.

Beispiel D für die Herstellung einer $SnO_2$-Anode:

Gemäss Beispiel C wurde ein mit $Sb^{3+}$-Ionen dotiertes Sol hergestellt. Dieses wurde in einem herkömmlichen Sprühtrockner zu einem kugelförmigen Pulver mit der Partikelgrösse 0,1 bis 1 mm verprüht. Das Pulver wurde mit einer Aufheizgeschwindigkeit von 100 °C/h auf eine Temperatur von 900 °C gebracht und während 2 h auf dieser Temperatur gehalten und schliesslich auf Raumtemperatur abgekühlt. Aus diesem gebrannten Pulver wurden durch das Sintern feste kompakte Keramikkörper in Form von Kugeln gebildet, welche als Festbettschüttung in einem elektrochemischen Reaktor dienten.

Verfahrensbeispiel 1:

Zur Durchführung des Verfahrens wurden gemäss Beispielen A bis C hergestellte Anoden von 1 dm² Fläche in eine elektrochemische Zelle eingebaut, welche als Elektrolyt eine Lösung von 1-normaler $H_2SO_4$ + $10^{-3}$-molarem Hydrochinon $C_6H_4(OH)_2$ enthielt. Die elektrochemischen Kennwerte wurden potentiostatisch während des Betriebes ermittelt. Dabei wurde das Hydrochinon durch anodische Oxydation abgebaut. Es wurde unter anderem die Stromausbeute für die Oxydation des Hydrochinons unter einer Ueberspannung von 1,7 V bestimmt. Desgleichen wurde die Ueberspannung an der Anode für eine Stromausbeute von 90 % gemessen, d.h. für den Fall, dass 90 % des durch die Zelle hindurchgeschickten Stromes zur Oxydation des Hydrochinons und 10 % zur Sauerstoffentwicklung beitragen. Die Werte wurden mit denjenigen von bekannten Pt-und $PbO_2$-Anoden unter gleichen Betriebsbedingungen verglichen und in der nachfolgenden Tabelle zusammengestellt.

| Elektrode | $SnO_2$ (Beisp.A) | $SnO_2$ (Beisp.B) | $SnO_2$ (Beisp.C) | $PbO_2$ | Pt |
|---|---|---|---|---|---|
| Stromausbeute (%) unter 1,7 V | 99 | 99 | 99 | 91 | 50 |

| Elektrode | $SnO_2$ (Beisp.A) | $SnO_2$ (Beisp.B) | $SnO_2$ (Beisp.C) | $PbO_2$ | Pt |
|---|---|---|---|---|---|
| Ueberspannung (V) bei einer Stromausbeute von 90 % | 1,93 | 1,97 | 1,75 | 1,75 | 1,55 |

Verfahrensbeispiel 2: Siehe Figur!

Zur Durchführung des Verfahrens wurde eine elektrochemische Zelle verwendet, die mit der nachfolgend beschriebenen Anode bestückt war:
Ein quadratisches Stück Titanstreckmetall von 50 mm Seitenlänge und 6 mm Maschenweite wurde gemäss Beispiel A vorbehandelt und mit einer mit Cl dotierten $SnO_2$-Oberflächenschicht versehen. Die fertige Elektrode wurde als Anode in eine ungeteilte elektrochemische Zelle eingesetzt, welche zur anodischen Oxydation von Benzoesäure $C_6H_5COOH$ verwendet wurde. Der Elektrolyt bestand aus 0,5 normaler $Na_2SO_4$-Lösung + 10 ppm Benzoesäure. Als Kathode diente ein ebenso grosses quadratisches Stück Titanstreckmetall, welches mit Platin beschichtet war. Die elektrochemische Zelle wurde mit einem konstanten Strom von 100 mA (entsprechend einer virtuellen Stromdichte von 2 mA/cm² auf beide Seiten der Anode bezogen) beaufschlagt. Der Elektrolyt wurde während der ganzen Zeitdauer des Betriebs gerührt. Die Konzentration der Benzoesäure sowie der totale organische Kohlenstoff wurden laufend bestimmt. Zum Vergleich wurde ein Versuch mit einer $PbO_2$-Anode durchgeführt. Die Resultate sind in der Figur graphisch dargestellt. Während die $PbO_2$-Anode für den Abbau von 10 ppm Benzoesäure auf den Wert Null eine Zeit von 24 h benötigte, betrug die Zeit für die $SnO_2$-Anode nur 5 h. Während im Falle der $PbO_2$-Anode der Gehalt an totalem organischen Kohlenstoff nach 26 h auf die Hälfte gesunken war, benötigte die $SnO_2$-Anode für die Erreichung des gleichen Wertes nur ca. 4 h.

Verfahrensbeispiel 3:

Zur Durchführung des Verfahens wurde eine gemäss Beispiel C hergestellte einseitig beschichtete Anode von 1 dm² einseitiger Fläche in eine ungeteilte elektrochemische Zelle eingebaut, welche zur anodischen Oxydaton des organischen Farbstoffs Orange II verwendet wurde. Der Elektrolyt bestand aus 0,5 normaler $Na_2SO_4$-Lösung + 1150 mg/l Farbstoff, wobei der pH-Wert durch NaOH-Zusatz auf 12,5 eingestellt wurde. Als Kathode diente ein ebenso grosses Stück Titanstreckmetall, welches mit Platin beschichtet war. Die Zelle wurde mit einem konstanten Strom von 1 A (entsprechend einer Stromdichte von 10 mA/cm²) beaufschlagt. Die Konzentrationen des Farbstoffs sowie des totalen organischen Kohlenstoffs wurden laufend bestimmt. Nach 10 min war die Farbstoffkonzentration auf 35% des Ausgangswertes gesunken und nach 30 min war er vollständig abgebaut. Die Konzentration des totalen organischen Kohlenstoffs war nach 1 h auf die Hälfte, nach 6 h auf 30% und nach 10 h auf 6% des Ausgangswertes abgesunken.

Verfahrensbeispiel 4:

Zur Durchführung des Verfahrens wurde die gleiche elektrochemische Zelle wie in Verfahrensbeispiel 3 benutzt. Es wurde der Abbau von Naphtalinsulfonsäure untersucht. Der Elektrolyt bestand aus 0,5 normaler $Na_2SO_4$-Lösung + 400 ppm Naphtalinsulfonsäure und war durch NaOH-Zusatz auf einen pH-Wert von 12,5 eingestellt. Die übrigen Betriebsparameter waren die gleichen wie in Verfahrensbeispiel 3. Nach 20 min war die Konzentration der Naphtalinsulfonsäure auf 30%, nach 40 min auf 8% und nach 3 h auf 2% des Ausgangswertes gesunken. Der totale Kohlenstoff fiel nach 1 h auf die Hälfte, nach 3 1/2 h auf 15% des Ausgangswertes.

Verfahrensbeispiel 5:

Zur Durchführung des Verfahrens wurde die gleiche elektrochemische Zelle wie in Verfahrensbeispiel 3 benutzt. Es wurde der Abbau eines Abwassers aus der Farbstoffherstellung (Fa. Ciba-Geigy, Basel) untersucht. Das Abwasser enthielt 865 mg/l totalen organischen lenstoff. Der Elektrolyt wurde durch Zugabe von NaOH auf einen pH-Wert von 12,5 eingestellt. Die übrigen Betriebsparameter entsprachen denjenigen von Verfahrensbeispiel 3. Es wurde der Gehalt an totalem organischen Kohlenstoff in Funktion der Betriebszeit der elektrochemischen Zelle bestimmt. Nach 2 h war der Gehalt auf ca. 42%, nach 8 h auf 9% abgesunken.

Bei allen Vergleichsversuchen konnte festgestellt werden, dass die $SnO_2$-Anode gemäss neuem Verfahren bezüglich Sauerstoffüberspannung und Eignung für anodische Oxydationsprozesse den herkömmlichen $PbO_2$-oder Pt-Anoden mindestens gleichwertig, in mancher Beziehung des Betriebsverhaltens aber deutlich überlegen ist. Letzteres gilt insbesondere für die Langzeitstabilität und die Unempfindlichkeit gegen kathodische Polarisation.

Die Erfindung ist nicht auf die Verfahrensbeispiele beschränkt. Es soll nochmals betont werden, dass die Elektrode gemäss neuem Verfahren keinerlei Edelmetalle in irgend einer Form oder Anordnung - auch nicht als Bestandteil eines Trägers oder einer Zwischenschicht oder einer Deckschicht - enthält. Ausserdem ist sie frei von $PbO_2$ oder Graphit.

Die Dotierung des $SnO_2$ zwecks Erzielung der notwendigen elektrischen Leitfähigkeit erfolgt mit F, Cl in Form von Anionen oder Sb, Mo, W, Nb, Ta in Form von Kationen. Falls die Anode nicht nur aus ihrem aktiven Teil in Form von Pulver oder in Form eines porösen oder dichten massiven Keramikkörpers besteht, wird ein Träger aus einem filmbildenden Metall wie Ti, Zr, Hf, Nb, Ta oder W verwendet, der eine $SnO_2$ Oberflächenschicht in Form eines Films oder eines pastenartigen Ueberzugs aufweist.

Die $SnO_2$-Elektrode gemäss neuem Verfahren erreicht in allen Ausführungsformen mindestens die Sauerstoffüberspannung einer $PbO_2$-Vergleichselektrode. In einer bevorzugten Aus führung erreicht ihre $O_2$-Einsatzspannung unter einer Stromdichte von 0,1 mA/cm² in 1 normaler $H_2SO_4$ unter einem Druck von 1 bar und einer Temperatur von 20 °C in Gegenwart einer Pt-Gegenelektrode und einer gesättigten Kalomel-Elektrode mindestens den Wert von 1,60 V, vorzugsweise einen solchen von 1,85 V.

## Ansprüche

1. Verfahren zur Reinigung industrieller Abwässer durch unmittelbare Oxydation der organischen Schadstoffe mittels elektrochemischer Oxydation in einer Zelle, dadurch gekennzeichnet, dass als Anode eine Elektrode mit hoher Sauerstoffüberspannung verwendet wird, welche weder in ihrem aktiven Teil noch in einer allfälligen Zwischenschicht Edelmetalle in irgend einer Form noch $PbO_2$ noch Graphit enthält, und dass der aktive Teil ausschliesslich aus mit F, Cl, Sb, Mo, W, Nb oder Ta oder einer Mischung von mindestens zweien der vorgenannten Elemente dotiertem $SnO_2$ besteht.

2. Verfahren nach Anspruch 1, dadurch gekennzeicht, dass die Sauerstoffüberspannung der Elektroden, gemessen unter gleichen Versuchsbedingungen, mindestens ebenso hoch ist, wie diejenige einer $PbO_2$-Vergleichselektrode.

3. Verfahren nach Anspruch 1, dadurch gekennzeichnet, dass die Sauerstoffüberspannung der Elektrode, gemessen als $O_2$-Einsatzspannung unter einer Stromdichte von 0,1 mA/cm² in 1normaler $H_2SO_4$ unter einem Druck von 1 bar und bei einer Temperatur von 20 °C in Gegenwart einer Pt-Gegenelektrode und einer gesättigten Kalomel-Elektrode mindestens den Wert von 1,60 V erreicht.

4. Verfahren nach Anspruch 3, dadurch gekennzeichnet, dass die Sauerstoffüberspannnung der Elektrode, gemessen als $O_2$-Einsatzspannung unter einer Stromdichte von 0,1 mA/cm² mindestens den Wert von 1,85 V erreicht.

5. Verfahren nach Anspruch 1, dadurch gekennzeichnet, dass die Elektrode ausschliesslich aus dem aus dotiertem $SnO_2$ bestehenden aktiven Teil in Form eines Pulvers oder eines gesinterten porösen Keramikkörpers besteht.

6. Verfahren nach Anspruch 1, dadurch gekennzeichnet, dass die Elektrode aus einem Träger aus Ti, Zr, Hf, Nb, Ta oder W und einer Oberflächenschicht aus dotiertem $SnO_2$ als aktivem Teil in Form eines Films oder pastenartigen oder keramischen Ueberzugs besteht.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | DE-A-1 962 860 (I.C.I.)<br>* Seite 4, Zeilen 8-19; Seiten 6,7, Beispiele 1,3 *<br>--- | 1-5 | C 02 F 1/46<br>C 25 B 11/04 |
| D,Y | DE-A-3 428 582 (D. WABNER)<br>* Seiten 1,2, Ansprüche 1-5; Seite 5, Ansprüche 20,21; Seite 9, Zeilen 25-29 *<br>--- | 1-5 | |
| A | EP-A-0 165 357 (E.I.F. ECOLOGIE)<br>* Seite 6, Zeilen 35-37; Seite 7, Zeilen 1-8 *<br>--- | 1 | |
| A | US-A-4 208 450 (DIAMOND SHAMROCK CORP.)<br>* Spalten 11,12; Anspruch 1 *<br>----- | 1 | |

**RECHERCHIERTE SACHGEBIETE (Int. Cl.4)**

C 02 F 1
C 25 B 11

Der vorliegende Recherchenbericht wurde für alle Patentansprüche erstellt

| Recherchenort | Abschlußdatum der Recherche | Prüfer |
|---|---|---|
| DEN HAAG | 31-05-1988 | GROSEILLER PH.A. |